(19) 

**Europäisches Patentamt**
**European Patent Office**
**Office européen des brevets**

(11) **EP 4 764 658 A1**

(12) **EUROPEAN PATENT APPLICATION**
published in accordance with Art. 153(4) EPC

(43) Date of publication:
**24.06.2026 Bulletin 2026/26**

(21) Application number: **24878505.7**

(22) Date of filing: **06.06.2024**

(51) International Patent Classification (IPC):
**G02B 27/01** *(2006.01)*    **G02B 17/08** *(2006.01)*

(52) Cooperative Patent Classification (CPC):
**G02B 17/08; G02B 27/01**

(86) International application number:
**PCT/CN2024/097863**

(87) International publication number:
**WO 2025/081852 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.10.2023 CN 202322814027 U**

(71) Applicant: **Hangzhou Lingban Technology Co.,
Ltd.**
**Hangzhou, Zhejiang 310000 (CN)**

(72) Inventors:
• **JIANG, Chaoqun**
  **Hangzhou, Zhejiang 310000 (CN)**
• **CHEN, Pengbo**
  **Hangzhou, Zhejiang 310000 (CN)**
• **DU, Hui**
  **Hangzhou, Zhejiang 310000 (CN)**
• **XIA, Jie**
  **Hangzhou, Zhejiang 310000 (CN)**

(74) Representative: **Huang, Liwei**
**Cäcilienstraße 12**
**40597 Düsseldorf (DE)**

(54) **DIOPTER-ADJUSTABLE NEAR-EYE DISPLAY DEVICE**

(57)    A diopter-adjustable near-eye display apparatus includes: a second imaging prism unit (3), including a first prism and a film unit, and the first prism has a first optical surface (31), a second optical surface (32), and a third optical surface (33); a display image source (1), moving relative to the second optical surface (32) of the first prism to implement diopter adjustment, where a focal length of the second optical surface (32) of the first prism ranges from 25 mm to 200 mm; a first imaging prism unit (2), disposed close to a human eye, where the film unit is located between the first optical surface (31) of the first prism and the first imaging prism unit (2); and a first imaging lens unit (4), disposed close to the third optical surface (33) of the first prism, where a first semi-transmissive and semi-reflective film is disposed on a side that is of the first imaging lens unit (4) and that is away from the second imaging prism unit (3). The diopter-adjustable near-eye display apparatus may implement a wide range of diopter adjustment to accommodate users with different degrees of myopia, and maintain a relatively high imaging quality and a relatively small change in field of view within an adjustment range, providing a better binocular image fusion effect, and contributing to compactness and lightweight.

FIG. 1

**Description**

**CROSS-REFERENCES TO RELATED APPLICATIONS**

This application claims priority to Chinese Patent Application No. 202322814027.1, filed with the China National Intellectual Property Administration on October 19, 2023, which is incorporated herein by reference in its entirety.

**TECHNICAL FIELD**

This application pertains to the field of near-eye display technologies, and specifically relates to a diopter-adjustable near-eye display apparatus.

**BACKGROUND**

Improving customer comfort is a crucial manifestation of core competitiveness of modern augmented reality (Augmented Reality, AR) products. Currently, over 50% of the population is myopic, among which over 80% are young adults. In order for myopia customers to use AR products normally, specific degrees of myopia lenses are used on the market to compensate for myopia effects. The approach of using specific degree of myopia lenses on AR products to ensure normal use of the AR products in the myopia population has the following drawbacks: 1. To add the myopia lenses to front of AR glasses, design of the AR products needs to reserve more space, which increases design difficulty and is not conducive to compactness and lightweight. 2. Customers with different degrees of myopia need different degrees of myopia lenses, which increases costs and compromises versatility. 3. In a focus adjustment process, imaging quality of some parts of a field of view deteriorates, and a field of view changes significantly, which is not conducive to ensuring a good binocular image fusion effect when there is a large diopter difference between the two eyes.

**SUMMARY**

This application aims to resolve the foregoing problem by proposing a diopter-adjustable near-eye display apparatus, to implement large diopter adjustment to accommodate users with different degrees of myopia, and maintain relatively high imaging quality and a relatively small change in field of view within an adjustment range, providing a better binocular image fusion effect, and contributing to compactness and lightweight.
To achieve the foregoing objective, this application uses the following technical solutions:
The diopter-adjustable near-eye display apparatus provided in this application includes a display image source, a first imaging prism unit, a second imaging prism unit, and a first imaging lens unit.
The second imaging prism unit includes a first prism and a film unit, the first prism has a first optical surface, a second optical surface, and a third optical surface, and the film unit is configured to fully or partially reflect light emitted by the display image source to the first imaging lens unit, and configured to transmit light reflected by the first imaging lens unit back to the second imaging prism unit.
The display image source moves relative to the second optical surface of the first prism to implement diopter adjustment, and a focal length of the second optical surface of the first prism ranges from 25 mm to 200 mm.
The first imaging prism unit is disposed close to a human eye, and the film unit is located between the first optical surface the first prism and the first imaging prism unit.
The first imaging lens unit is disposed close to the third optical surface of the first prism, and a first semi-transmissive and semi-reflective film is disposed on a side that is of the first imaging lens unit and that is away from the second imaging prism unit.
In some optional embodiments, the diopter-adjustable near-eye display apparatus further includes a second imaging lens unit, where the second imaging lens unit is disposed close to the first semi-transmissive and semi-reflective film, and a focal length of the second imaging lens unit and a focal length of the first imaging lens unit have opposite values.
In some optional embodiments, the focal length of the first imaging lens unit ranges from 10 mm to 25 mm.
In some optional embodiments, the film unit includes at least one selected from a second semi-transmissive and semi-reflective film, a reflective polarizing film, a quarter-wave plate, and an absorptive polarizing film.
In some optional embodiments, a transmittance-to-reflectance ratio of each of the semi-transmissive and semi-reflective films ranges from 1:9 to 9:1.
In some optional embodiments, the distance between the display image source and the second optical surface of the first prism ranges from 0.25 mm to 3.0 mm.
In some optional embodiments, the second optical surface of the first prism is a spherical surface or an aspherical surface, and a lens surface of the first imaging lens unit is a free combination of any selected from a spherical surface, an aspherical surface, a free-form surface, a Fresnel surface, and a planar surface.

In some optional embodiments, the diopter-adjustable near-eye display apparatus further meets the following conditions:

$$R1 \leq -100 \text{ mm or } R1 \geq 100 \text{ mm};$$

$$-40 \text{ mm} \leq R2 \leq -100 \text{ mm};$$

and

$$R3 \leq -200 \text{ mm or } R3 \geq 18 \text{ mm},$$

where R1 represents a radius of curvature of a lens surface that is of the first imaging lens unit and that is close to the second imaging prism unit, R2 represents a radius of curvature of a lens surface that is of the first imaging lens unit and that is away from the second imaging prism unit, and R3 represents a radius of curvature of the second optical surface of the first prism.

In some optional embodiments, a formula for the aspherical surface is as follows:

$$z = \frac{CY^2}{1 + \sqrt{1 - (1+k)C^2Y^2}} + \sum_{i=2}^{N} a_i Y^{2i}$$

where z is a sagittal height, $Y$ is a lens center height, $k$ is a conic coefficient, $C$ is a curvature, $a_i$ is a $(2i)^{th}$ order aspherical coefficient, and $N$ is a positive integer.

In some optional embodiments, the diopter-adjustable near-eye display apparatus further meets the following conditions:

| lens surface | R | k | $a_2$ | $a_3$ | $a_4$ | $a_5$ | $a_6$ |
|---|---|---|---|---|---|---|---|
| Len1_S1 | 121.258 | 20.875 | 8.904E-06 | -9.721E-09 | 1.509E-11 | -6.648E-14 | 4.967E-16 |
| Len1_S2 | -76.681 | 15.429 | 9.487E-07 | -1.952E-09 | -1.724E-11 | 1.0755E-13 | 7.325E-17 |
| P2_S3 | 92.176 | 83.964 | -8.063E-04 | 2.352E-05 | -1.074E-07 | -2.971E-09 | 2.369E-11 |

where R represents a radius of curvature, with a unit of mm, Len1_S1 represents a lens surface that is of the first imaging lens unit and that is close to the second imaging prism unit, Len1_S2 represents a lens surface that is of the first imaging lens unit and that is away from the second imaging prism unit, and P2_S3 represents the second optical surface of the first prism.

Compared with a conventional technology, this application brings the following beneficial effects.

By adjusting the distance between the display image source and the second optical surface of the first prism, the near-eye display apparatus implements diopter adjustment without adding any accessories. To be specific, adjustment of a position of the display image source, in combination with a surface type of the second optical surface of the second imaging prism unit, allows for proper setting of a focal length range of the second optical surface. This can implement a function of adjusting a virtual image distance (diopter), and maintain relatively high imaging quality and a relatively small change in field of view within an adjustment range. For example, a virtual image distance adjustment range is 5000 mm to 142 mm, and the diopter is adjusted within 0D to -7D, and high imaging quality is maintained. Within a virtual image distance adjustment range from 0D to -7D, the change in field of view can be controlled within 0.8°, so as to ensure a good binocular image fusion effect within the adjustment range when there is a large diopter difference between the two eyes. In addition, the near-eye display apparatus may implement optical path folding, which not only ensures sufficient optical path for imaging light but also facilitates implementation of compactness and lightweight.

**BRIEF DESCRIPTION OF DRAWINGS**

FIG. 1 is a diagram of a structure of a diopter-adjustable near-eye display apparatus according to this application;
FIG. 2 is an MTF graph at a diopter of 0D according to an embodiment of this application;

FIG. 3 is a spot diagram at a diopter of 0D according to an embodiment of this application;

FIG. 4 is an MTF graph at a diopter of -3D according to an embodiment of this application;

FIG. 5 is a spot diagram at a diopter of -3D according to an embodiment of this application;

FIG. 6 is an MTF graph at a diopter of -7D according to an embodiment of this application; and

FIG. 7 is a spot diagram at a diopter of -7D according to an embodiment of this application.

Description of reference numerals: 1. display image source; 2. first imaging prism unit; 3. second imaging prism unit; 4. first imaging lens unit; 5. second imaging lens unit; 6. aperture stop; 31. first optical surface; 32. second optical surface; 33. third optical surface.

## DESCRIPTION OF EMBODIMENTS

Technical solutions in embodiments of this application are clearly and comprehensively described below with reference to the accompanying drawings in the embodiments of this application. It is clear that the described embodiments are merely some but not all of the embodiments of this application. Based on the embodiments of this application, all other embodiments obtained by a person of ordinary skill in the art without creative efforts fall within the protection scope of this application.

It should be noted that, unless otherwise defined, all technical and scientific terms used in this specification have same meanings as those usually understood by a person skilled in the art of this application. Terms used in this specification of this application are merely intended to describe some specific embodiments, but not to limit this application.

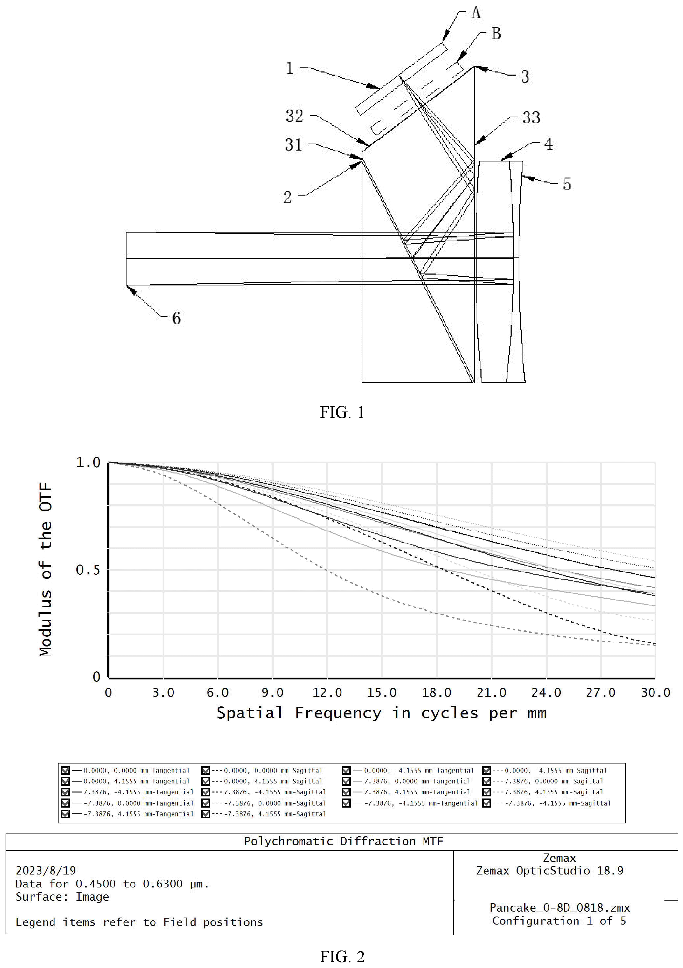

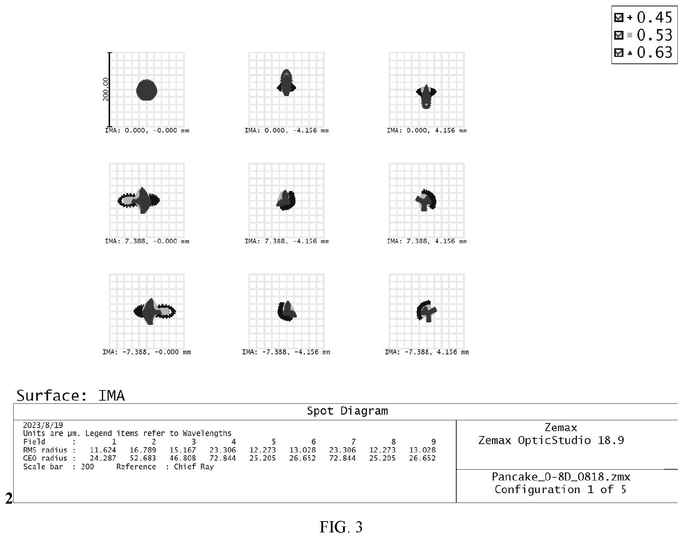

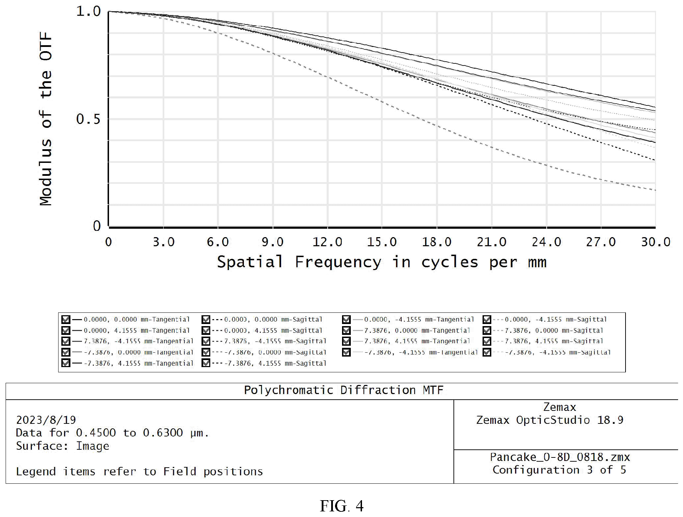

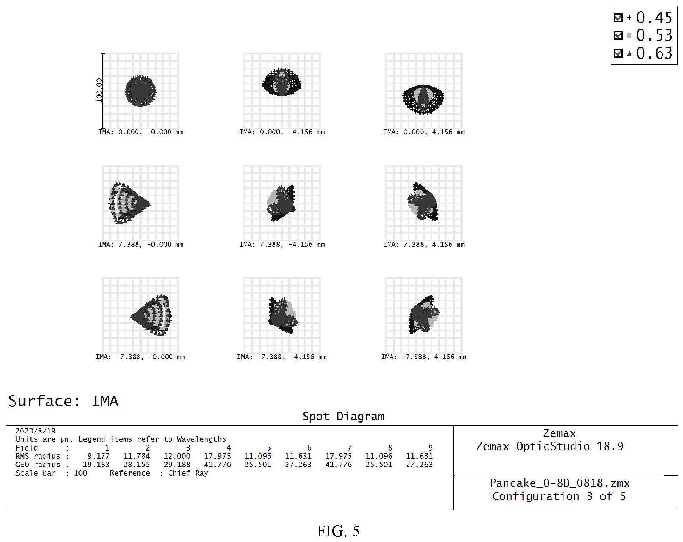

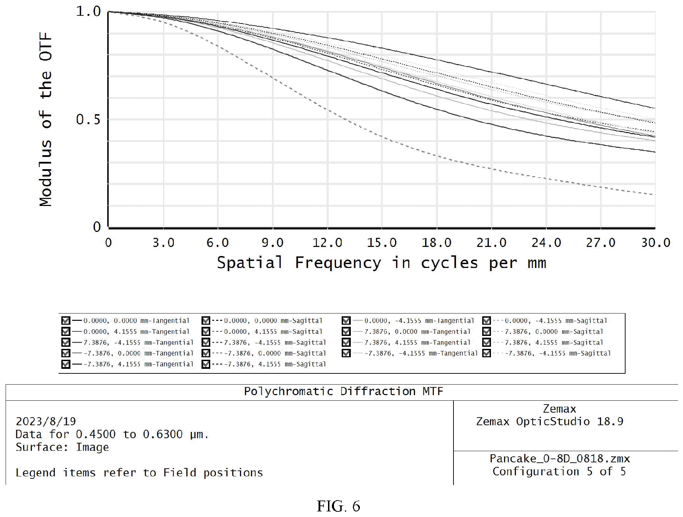

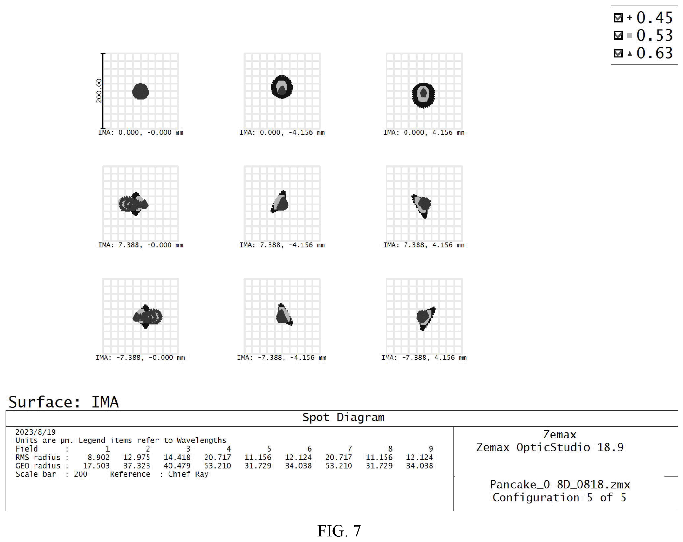

As shown in FIG. 1 to FIG. 7, a diopter-adjustable near-eye display apparatus includes a display image source 1, a first imaging prism unit 2, a second imaging prism unit 3, and a first imaging lens unit 4.

The second imaging prism unit 3 includes a first prism and a film unit, the first prism has a first optical surface 31, a second optical surface 32, and a third optical surface 33, and the film unit is configured to fully or partially reflect light emitted by the display image source 1 to the first imaging lens unit 4, and configured to transmit light reflected by the first imaging lens unit 4 back to the second imaging prism unit 3.

The display image source 1 moves relative to the second optical surface 32 of the first prism to implement diopter adjustment, and a focal length of the second optical surface 32 of the first prism ranges from 25 mm to 200 mm.

The first imaging prism unit 2 is disposed close to a human eye, and the film unit is located between the first optical surface 31 the first prism and the first imaging prism unit 2.

The first imaging lens unit 4 is disposed close to the third optical surface 33 of the first prism, and a first semi-transmissive and semi-reflective film is disposed on a side that is of the first imaging lens unit 4 and that is away from the second imaging prism unit 3.

As shown in FIG. 1, a solid line box A represents the display image source 1 at a diopter of 0D, and a dotted line box B represents the display image source 1 at a diopter of -7D. The display image source 1 may be one of an OLED display, a LCOS display, a micro-LED display, a DLP display, or an LBS display, and is preferably an OLED display.

The first imaging prism unit 2 is a prism that has an aberration correction function and optical path difference compensation for upper and lower fields of view. The prism may be made of a plastic material or a glass material with no limitation on quantity, and includes but is not limited to the following surface types: a spherical lens, an aspherical lens, a free-form lens, a Fresnel lens, a planar lens, and the like. The spherical lens is preferred.

The second imaging prism unit 3 includes the first prism and the film unit, where the first prism may be made of a plastic material or a glass material. The film unit is located between the first optical surface 31 of the first prism and the first imaging prism unit 2, may be attached to the first prism or the first imaging prism unit 2, or may be coated on the first prism or the first imaging prism unit 2. The film unit causes light to transmit, where the light is emitted by the display image source 1, reflected (or partially reflected) when first reaching the first optical surface 31 of the first prism, and reflected to the second imaging prism unit 3 by the first imaging lens unit 4.

The first imaging lens unit 4 includes a series of lenses that have an aberration correction function and an optical path reflection function. The lens may be made of a glass material or a plastic material, and includes but is not limited to the following types: a spherical lens, an aspherical lens, a free-form lens, a Fresnel lens, a planar lens, and the like. The spherical lens is preferred. In addition, the first semi-transmissive and semi-reflective film is disposed on a side that is of the first imaging lens unit 4 and that is away from the second imaging prism unit 3. The first semi-transmissive and semi-reflective film may be implemented in a film coating manner or a film attachment manner.

The diopter-adjustable near-eye display apparatus may further include an aperture stop 6, where the aperture stop 6 is located between the first imaging prism unit 2 and the human eye, or the aperture stop 6 is at a position of the human eye.

The focal length of the second optical surface 32 of the first prism ranges from 25 mm to 200 mm, which can cooperate with movement of the display image source 1 to implement diopter adjustment. For example, a distance between the display image source 1 and the second optical surface 32 of the first prism ranges from 0.25 mm to 3.0 mm, that is, when the display image source 1 gradually approaches the first prism, the distance between the display image source 1 and the second optical surface 32 of the first prism gradually decreases, and a diopter may be adjusted from 0D to -7D; or when the display image source 1 gradually moves away from the first prism, the distance between the display image source 1 and the second optical surface 32 of the first prism gradually widens, and the diopter may be adjusted from -7D to 0D. If the focal length of the second optical surface 32 of the first prism is not within the range, an imaging effect of a specific field of view may deteriorate in a focusing process, for example, resulting in non-uniformity of a picture, reduced edge sharpness, or rectangular distortion of a picture. In addition, a change in field of view between 0D and -7D may be relatively large (approximately 3°), causing a relatively large difference in definition and picture size of an image seen by a user with a relatively large difference in visual acuity between the two eyes. Therefore, it is difficult to implement binocular image fusion, and wearing and viewing experience is poor.

An included angle between the first optical surface 31 and the third optical surface 33 of the first prism preferably ranges from 15° to 35°. If the included angle is too small, the light emitted by the display image source 1 undergoes multiple reflections in the first prism, or cannot meet a requirement for a total reflection of the light emitted by the display image source 1 on the first prism. If the included angle is too large, the light emitted by the display image source 1 can undergo only one reflection in the first prism before being emitted, and cannot meet a requirement for optical path folding by performing two reflections in the first prism. Therefore, if the included angle is within the range, it can be ensured that a light emitted by the display image source 1 undergoes two reflections in the first prism, which helps to obtain a compact and lightweight near-eye display apparatus. In addition, the second optical surface 32 of the first prism in embodiments is further preferably disposed obliquely toward the human eye side.

During operation, light emitted by the display image source 1 enters the first prism through the second optical surface 32 of the first prism, undergoes the first reflection on the third optical surface 33 of the first prism, and is reflected to the first optical surface 31 of the first prism. The film unit is disposed between the first optical surface 31 of the first prism and the first imaging prism unit 2, so that the light undergoes the second reflection on the first optical surface 31 of the first prism, and is transmitted by the third optical surface 33 of the first prism into the first imaging lens unit 4. The first semi-transmissive and semi-reflective film is disposed on the first imaging lens unit 4, so that the light is reflected back to the second imaging prism unit 3, and then is transmitted sequentially through the second imaging prism unit 3 and the first imaging prism unit 2 before entering the human eye for imaging. The distance between the display image source 1 and the second optical surface 32 of the first prism is adjusted to implement diopter adjustment, that is, the adjustment of a position of the display image source 1, in combination with a surface type of the second optical surface 32 of the second imaging prism unit 3, allows for proper setting of a focal length range of the second optical surface 32. This can implement a function of adjusting a virtual image distance (diopter), and maintain relatively high imaging quality and a relatively small change in field of view within an adjustment range. For example, the virtual image distance adjustment range is 5000 mm to 142 mm, and the diopter is adjusted from 0D to -7D, and high imaging quality is maintained. Within a virtual image distance adjustment range from 0D to -7D, the change in field of view can be controlled within 0.8°, so as to ensure good consistency between images seen by the two eyes when there is a large diopter difference between the two eyes, thereby achieving a good binocular image fusion effect.

In an embodiment, the diopter-adjustable near-eye display apparatus further includes a second imaging lens unit 5, where the second imaging lens unit 5 is disposed close to the first semi-transmissive and semi-reflective film, and a focal length of the second imaging lens unit 5 and a focal length of the first imaging lens unit 4 have opposite values.

The second imaging lens unit 5 includes a series of lenses that have an aberration correction function, to correct an aberration generated by a human eye through the first imaging lens unit 4, and ensure that an external aberration of the human eye is sufficiently small. The lens constituting the second imaging lens unit 5 may be made of a plastic material or a glass material. A quantity of the lenses is not limited, and a surface type includes but is not limited to the following types: a spherical lens, an aspherical lens, a free-form lens, a Fresnel lens, a planar lens, and the like. The spherical lens is preferred.

In an embodiment, the focal length of the first imaging lens unit 4 ranges from 10 mm to 25 mm. This facilitates accommodating a large field of view and an image plane size, and controlling distortion.

In an embodiment, the film unit includes at least one selected from a second semi-transmissive and semi-reflective film, a reflective polarizing film, a quarter-wave plate, and an absorptive polarizing film. For example, the film unit may be a reflective polarizing film, or the film unit may be a combination of a reflective polarizing film and a quarter-wave plate, where the quarter-wave plate may be located between the reflective polarizing film and the first prism, or the film unit may be a second semi-transmissive and semi-reflective film, or the like. A specific configuration can be adjusted according to an actual requirement.

In an embodiment, a transmittance-to-reflectance ratio of each of the semi-transmissive and semi-reflective films ranges from 1:9 to 9:1. The semi-transmissive and semi-reflective film enables the light to be partially reflected and partially transmitted. The ratio of reflection to transmission of the semi-transmissive and semi-reflective film may be determined based on a combination of factors, such as an angle of the incident light, luminance of a display image source, and luminance of an external environment.

In an embodiment, the distance between the display image source 1 and the second optical surface 32 of the first prism ranges from 0.25 mm to 3.0 mm. If a moving range of the display image source 1 is insufficient, a problem may be caused that the virtual image distance adjustment range (0D to -7D) is insufficient. Selecting the range as the distance between the display image source 1 and the second optical surface 32 of the first prism facilitates obtaining a larger diopter adjustment range, to adapt to a wider population. If the distance is out of the range, distortion of an output image picture cannot be controlled, and an imaging requirement cannot be met. In addition, a change in FOV may also be relatively large, and a requirement for binocular image fusion in a diopter adjustment range cannot be met.

In an embodiment, the second optical surface 32 of the first prism is a spherical surface or an aspherical surface, and a lens surface of the first imaging lens unit 4 is a free combination of any selected from a spherical surface, an aspherical surface, a free-form surface, a Fresnel surface, and a planar surface.

In an embodiment, the diopter-adjustable near-eye display apparatus further meets the following conditions:

$$R1 \leq -100 \text{ mm or } R1 \geq 100 \text{ mm;}$$

$$-40 \text{ mm} \leq R2 \leq -100 \text{ mm;}$$

and

$$R3 \leq -200 \text{ mm or } R3 \geq 18 \text{ mm,}$$

where R1 represents a radius of curvature of a lens surface that is of the first imaging lens unit and that is close to the second imaging prism unit, R2 represents a radius of curvature of a lens surface that is of the first imaging lens unit and that is away from the second imaging prism unit, and R3 represents a radius of curvature of the second optical surface of the first prism.

In an embodiment, a formula for the aspherical surface is as follows:

$$z = \frac{CY^2}{1 + \sqrt{1 - (1+k)C^2Y^2}} + \sum_{i=2}^{N} a_i Y^{2i}$$

where z is a sagittal height, $Y$ is a lens center height, $k$ is a conic coefficient, $C$ is a curvature, $a_i$ is a $(2i)^{th}$ order aspherical coefficient, and $N$ is a positive integer.

Any surface that is of the diopter-adjustable near-eye display apparatus and that is of an even aspherical surface type meets the foregoing formula.

Detailed descriptions are provided below by using specific embodiments.

In the embodiments, the diopter-adjustable near-eye display apparatus adjusts the virtual image distance (diopter) by adjusting the position of the display image source 1 in combination with the surface type of the second optical surface 32 of the first prism in a prism total reflection architecture. The second optical surface 32 of the first prism is an aspherical surface, the first imaging lens unit 4 is a biconvex aspherical lens, the second imaging lens unit 5 is a biconcave spherical lens. A refractive index of the prism in the first imaging prism unit 2 or the second imaging prism unit 3 ranges from 1.45 to 1.75, and an Abbe number ranges from 18.0 to 60.0; and a refractive index of the first imaging lens unit 4 ranges from 1.45 to 1.90, and an Abbe number ranges from 35.0 to 85.0. The focal length of the second optical surface 32 of the first prism is 170 mm, and the display image source 1 may move relative to the second optical surface 32 of the first prism, so that the distance between the display image source 1 and the second optical surface 32 of the first prism ranges from 0.25 mm to 3.0 mm.

Aspherical parameters are shown in Table 1:

**Table 1**

| lens surface | R | k | 4th order ($a_2$) | 6th order ($a_3$) | 8th order ($a_4$) | 10th order ($a_5$) | 12th order ($a_6$) |
|---|---|---|---|---|---|---|---|
| Len1_S1 | 121.258 | 20.875 | 8.904E-06 | -9.721E-09 | 1.509E-11 | -6.648E-14 | 4.967E-16 |
| Len1_S2 | -76.681 | 15.429 | 9.487E-07 | -1.952E-09 | -1.724E-11 | 1.0755E-13 | 7.325E-17 |
| P2_S3 | 92.176 | 83.964 | -8.063E-04 | 2.352E-05 | -1.074E-07 | -2.971E-09 | 2.369E-11 |

where R represents a radius of curvature, with a unit of mm, Len1_S1 represents a lens surface that is of the first imaging lens unit 4 and that is close to the second imaging prism unit 3, Len1_S2 represents a lens surface that is of the first imaging lens unit 4 and that is away from the second imaging prism unit 3, and P2_S3 represents the second optical surface 32 of the first prism.

Diopter adjustment parameters are shown in Table 2:

**Table 2**

| Virtual image distance (mm) | Corresponding diopter | Distance between the display image source 1 and P2_S3 (mm) |
|---|---|---|
| 5000 | 0D | 2.519 |
| 1000 | -1D | 2.159 |
| 500 | -2D | 1.866 |
| 333.33 | -3D | 1.566 |
| 250 | -4D | 1.266 |
| 200 | -5D | 0.959 |
| 166.67 | -6D | 0.659 |
| 142.86 | -7D | 0.284 |

According to the foregoing data, as shown in FIG. 2 to FIG. 7, when the near-eye display apparatus in the embodiments is at a diopter of 0D, -3D, and -7D, MTF values are all above 0.15 at 30lp/mm, and have relatively high imaging quality. It can be learned from the spot diagrams that the near-eye display apparatus has high resolution and produces clear images. This indicates that imaging quality of the near-eye display apparatus is good in an adjustment process of 0D to -7D, and does not significantly decrease.

The technical features of the foregoing embodiments may be combined arbitrarily. For brevity of description, not all possible combinations of the technical features of the foregoing embodiments are described. However, the combinations of these technical features should be considered as falling within the scope of this specification provided that there is no contradiction between the combinations.

The foregoing embodiments are merely some specific and detailed embodiments of this application, and descriptions of these embodiments should not be understood as a limitation on the scope of this application. It should be noted that a person of ordinary skill in the art can make any variations and improvements without departing from the concept of this application, and these variations and improvements shall fall within the protection scope of this application. Therefore, the protection scope of this application shall be subject to the appended claims.

## Claims

1.    A diopter-adjustable near-eye display apparatus, wherein the diopter-adjustable near-eye display apparatus comprises a display image source (1), a first imaging prism unit (2), a second imaging prism unit (3), and a first imaging lens unit (4),

 wherein the second imaging prism unit (3) comprises a first prism and a film unit, the first prism has a first optical surface (31), a second optical surface (32), and a third optical surface (33), and the film unit is configured to fully or partially reflect light emitted by the display image source (1) to the first imaging lens unit (4), and configured to transmit light which is reflected by the first imaging lens unit (4) back to the second imaging prism unit (3);
 the display image source (1) is able to move relative to the second optical surface (32) of the first prism to implement diopter adjustment, and a focal length of the second optical surface (32) of the first prism ranges from 25 mm to 200 mm;
 the first imaging prism unit (2) is disposed close to a human eye, and the film unit is located between the first optical surface (31) of the first prism and the first imaging prism unit (2); and
 the first imaging lens unit (4) is disposed close to the third optical surface (33) of the first prism, and a first semi-transmissive and semi-reflective film is disposed on a side of the first imaging lens unit (4) away from the second imaging prism unit (3).

2.    The diopter-adjustable near-eye display apparatus according to claim 1, wherein the diopter-adjustable near-eye display apparatus further comprises a second imaging lens unit (5), the second imaging lens unit (5) is disposed close to the first semi-transmissive and semi-reflective film, and a focal length of the second imaging lens unit (5) and a focal length of the first imaging lens unit (4) have opposite values.

3. The diopter-adjustable near-eye display apparatus according to claim 2, wherein the focal length of the first imaging lens unit (4) ranges from 10 mm to 25 mm.

4. The diopter-adjustable near-eye display apparatus according to claim 1, wherein the film unit comprises at least one selected from a second semi-transmissive and semi-reflective film, a reflective polarizing film, a quarter-wave plate, and an absorptive polarizing film.

5. The diopter-adjustable near-eye display apparatus according to claim 4, wherein a transmittance-to-reflectance ratio of each of the semi-transmissive and semi-reflective films ranges from 1:9 to 9:1.

6. The diopter-adjustable near-eye display apparatus according to claim 1, wherein a distance between the display image source (1) and the second optical surface (32) of the first prism ranges from 0.25 mm to 3.0 mm.

7. The diopter-adjustable near-eye display apparatus according to claim 1, wherein the second optical surface (32) of the first prism is a spherical surface or an aspherical surface, and a lens surface of the first imaging lens unit (4) is a free combination of any selected from a spherical surface, an aspherical surface, a free-form surface, a Fresnel surface, and a planar surface.

8. The diopter-adjustable near-eye display apparatus according to claim 7, wherein the diopter-adjustable near-eye display apparatus further meets the following conditions:

$$R1 \leq -100 \text{ mm or } R1 \geq 100 \text{ mm};$$

$$-40 \text{ mm} \leq R2 \leq -100 \text{ mm};$$

and

$$R3 \leq -200 \text{ mm or } R3 \geq 18 \text{ mm},$$

wherein R1 represents a radius of curvature of a lens surface that is of the first imaging lens unit (4) and that is close to the second imaging prism unit (3), R2 represents a radius of curvature of a lens surface that is of the first imaging lens unit (4) and that is away from the second imaging prism unit (3), and R3 represents a radius of curvature of the second optical surface (32) of the first prism.

9. The diopter-adjustable near-eye display apparatus according to claim 8, wherein a formula for the aspherical surface is as follows:

$$z = \frac{CY^2}{1 + \sqrt{1 - (1+k)C^2Y^2}} + \sum_{i=2}^{N} a_i Y^{2i}$$

wherein z is a sagittal height, $Y$ is a lens center height, $k$ is a conic coefficient, $C$ is a curvature, $a_i$ is a $(2i)^{th}$ order aspherical coefficient, and $N$ is a positive integer.

10. The diopter-adjustable near-eye display apparatus according to claim 9, wherein the diopter-adjustable near-eye display apparatus further meets the following conditions:

| lens surface | R | $k$ | $a_2$ | $a_3$ | $a_4$ | $a_5$ | $a_6$ |
|---|---|---|---|---|---|---|---|
| Len1_S1 | 121.258 | 20.875 | 8.904E-06 | -9.721E-09 | 1.509E-11 | -6.648E-14 | 4.967E-16 |
| Len1_S2 | -76.681 | 15.429 | 9.487E-07 | -1.952E-09 | -1.724E-11 | 1.0755E-13 | 7.325E-17 |

(continued)

| lens surface | R | $k$ | $a_2$ | $a_3$ | $a_4$ | $a_5$ | $a_6$ |
|---|---|---|---|---|---|---|---|
| P2_S3 | 92.176 | 83.964 | -8.063E-04 | 2.352E-05 | -1.074E-07 | -2.971E-09 | 2.369E-11 |

wherein R represents a radius of curvature, with a unit of mm, Len1_S1 represents a lens surface that is of the first imaging lens unit (4) and that is close to the second imaging prism unit (3), Len1_S2 represents a lens surface that is of the first imaging lens unit (4) and that is away from the second imaging prism unit (3), and P2_S3 represents the second optical surface (32) of the first prism.

FIG. 1

| Polychromatic Diffraction MTF | |
|---|---|
| 2023/8/19<br>Data for 0.4500 to 0.6300 µm.<br>Surface: Image<br><br>Legend items refer to Field positions | Zemax<br>Zemax OpticStudio 18.9<br><br>Pancake_0-8D_0818.zmx<br>Configuration 1 of 5 |

FIG. 2

FIG. 3

| | |
|---|---|
| Polychromatic Diffraction MTF | |
| 2023/8/19<br>Data for 0.4500 to 0.6300 µm.<br>Surface: Image<br><br>Legend items refer to Field positions | Zemax<br>Zemax OpticStudio 18.9 |
| | Pancake_0-8D_0818.zmx<br>Configuration 3 of 5 |

FIG. 4

**Surface: IMA**

Spot Diagram

| 2023/8/19 | | | | | | | | | |
|---|---|---|---|---|---|---|---|---|---|
| Units are μm. Legend items refer to Wavelengths | | | | | | | | | |
| Field : | 1 | 2 | 3 | 4 | 5 | 6 | 7 | 8 | 9 |
| RMS radius : | 9.177 | 11.784 | 12.000 | 17.975 | 11.096 | 11.631 | 17.975 | 11.096 | 11.631 |
| GEO radius : | 19.183 | 28.155 | 29.188 | 41.776 | 25.501 | 27.263 | 41.776 | 25.501 | 27.263 |
| Scale bar : 100 Reference : Chief Ray | | | | | | | | | |

Zemax
Zemax OpticStudio 18.9

Pancake_O-8D_0818.zmx
Configuration 3 of 5

FIG. 5

FIG. 6

**Surface: IMA**

FIG. 7

## INTERNATIONAL SEARCH REPORT

| International application No. |
| --- |
| **PCT/CN2024/097863** |

| A. | CLASSIFICATION OF SUBJECT MATTER |
| --- | --- |

G02B27/01(2006.01)i; G02B17/08(2006.01)i

According to International Patent Classification (IPC) or to both national classification and IPC

| B. | FIELDS SEARCHED |
| --- | --- |

Minimum documentation searched (classification system followed by classification symbols)

IPC: G02B

Documentation searched other than minimum documentation to the extent that such documents are included in the fields searched

Electronic data base consulted during the international search (name of data base and, where practicable, search terms used)

CNABS, WPABS, WPABSC, ENTXT, ENTXTC, DWPI, VEN, CJFD: 屈光度, 调, 变, 改, 显示, 像源, 距离, 移, 动, 棱镜, 第二, 第2, 曲面, 焦距, 光焦度, 曲率, 半径, diopter+, adjust+, chang+, differ+, display+, imag+, sourc+, distanc+, shift+, prism +, second+, 2nd+, curv+, focus+, optic+, power+, radi+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 116165804 A (ROKID CORP.) 26 May 2023 (2023-05-26) description, paragraphs 19-59, and figures 1-4 | 1-9 |
| X | CN 116841050 A (ROKID CORP.) 03 October 2023 (2023-10-03) description, paragraphs 48-133, and figures 1-12 | 1-9 |
| A | CN 116088086 A (FUZHOU BOE OPTOELECTRONICS TECHNOLOGY CO., LTD. et al.) 09 May 2023 (2023-05-09) entire document | 1-10 |
| A | CN 108957750 A (GOERTEK TECHNOLOGY CO., LTD.) 07 December 2018 (2018-12-07) entire document | 1-10 |
| A | US 2002034016 A1 (MIXED REALITY SYSTEMS LAB INC. ) 21 March 2002 (2002-03-21) entire document | 1-10 |
| A | US 2013027784 A1 (TAKAHASHI, K.) 31 January 2013 (2013-01-31) entire document | 1-10 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 September 2024** | **30 September 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/097863**

| Patent document cited in search report | | | Publication date (day/month/year) | Patent family member(s) | | | Publication date (day/month/year) |
|---|---|---|---|---|---|---|---|
| CN | 116165804 | A | 26 May 2023 | None | | | |
| CN | 116841050 | A | 03 October 2023 | None | | | |
| CN | 116088086 | A | 09 May 2023 | None | | | |
| CN | 108957750 | A | 07 December 2018 | US | 2021302746 | A1 | 30 September 2021 |
| | | | | WO | 2020010703 | A1 | 16 January 2020 |
| US | 2002034016 | A1 | 21 March 2002 | EP | 1043619 | A2 | 11 October 2000 |
| | | | | EP | 1043619 | A3 | 23 June 2004 |
| | | | | EP | 1043619 | B1 | 21 February 2007 |
| | | | | DE | 60033463 | D1 | 05 April 2007 |
| | | | | DE | 60033463 | T2 | 31 October 2007 |
| | | | | ATE | 354816 | T1 | 15 March 2007 |
| | | | | US | 6480337 | B2 | 12 November 2002 |
| US | 2013027784 | A1 | 31 January 2013 | US | 8724229 | B2 | 13 May 2014 |
| | | | | JP | 2013029704 | A | 07 February 2013 |
| | | | | JP | 5791991 | B2 | 07 October 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202322814027